# EUROPEAN PATENT SPECIFICATION

(11) **EP 3 550 890 B1**
(45) Date of publication and mention of the grant of the patent: **23.03.2022**
(21) Application number: 17888978.8
(22) Date of filing: 22.12.2017
(51) Int. Cl.: G01S 5/02, H04W 40/02, H04W 64/00, H04W 84/12

(54) **METHOD FOR RECOGNIZING LINE-OF-SIGHT PATH, AND WIRELESS DEVICE**
VERFAHREN ZUR ERKENNUNG DES BLICKRICHTUNGSWEGS UND DRAHTLOSE VORRICHTUNG
PROCÉDÉ DE RECONNAISSANCE DE TRAJET EN VISIBILITÉ DIRECTE, ET DISPOSITIF SANS FIL

(30) Priority: 26.12.2016 CN 201611219561; 26.12.2016 CN 201611219604
(43) Date of publication of application: 09.10.2019
(73) Proprietor: Huawei Technologies Co., Ltd., Longgang District Shenzhen, Guangdong 518129 (CN)
(72) Inventor: PAN, Chun, Shenzhen Guangdong 518129 (CN); LANG, Songping, Shenzhen Guangdong 518129 (CN); JIANG, Xingfeng, Shenzhen Guangdong 518129 (CN)
(74) Representative: Gill Jennings & Every LLP
(86) International application number: PCT/CN2017/118023
(87) International publication number: WO 2018/121438

(56) References cited:
- CN-A- 102 647 785
- CN-A- 102 707 259
- CN-A- 103 124 184
- CN-A- 103 189 854
- US-A- 5 945 948
- US-A1- 2012 269 170
- US-A1- 2016 366 554

## Description

### TECHNICAL FIELD

This application relates to the field of wireless communications, and in particular, to a method for identifying a line of sight path and a wireless device.

### BACKGROUND

A wireless local area network (English: wireless local area network, WLAN) can provide a positioning capability, to complete various services (such as navigation, advertisement push, surrounding service discovery, and people flow monitoring).

A WLAN positioning system may determine an angle of arrival (English: angle of arrival, AoA) of a radio signal. A position of a to-be-identified device may be obtained based on a plurality of AoAs (which may be measured by using one or more WLAN devices), measured by a WLAN device, of the to-be-identified device. The radio signal sent by the to-be-identified device may arrive at the WLAN device through a plurality of paths. The radio signals arrive at the WLAN device through different paths have same content, and therefore the radio signals are duplicates of a same radio signal. The signal received by the WLAN device is superposition of the radio signals that arrive at the WLAN device one after another through the plurality of paths. The radio signals that arrive at the WLAN device through the different paths have different AoAs. An AoA of the radio signal transmitted through a line of sight (English: line of sight, LOS) path is an accurate angle of the to-be-identified device. Therefore, the WLAN device that measures the AoA needs to determine the LOS path between the to-be-identified device (for example, a terminal) and the WLAN device (for example, an access point (English: access point, AP)).

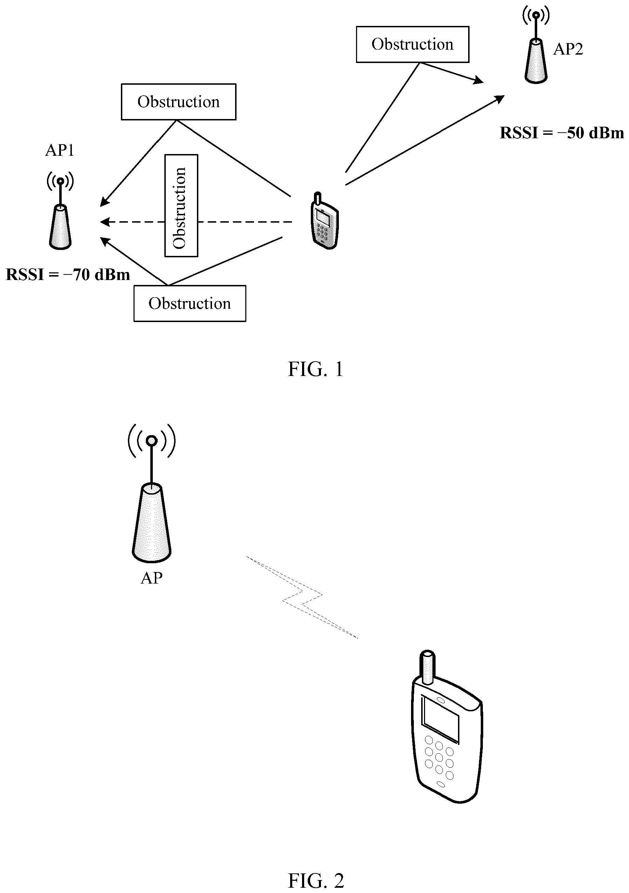

The AP may determine the LOS path of the to-be-identified device based on a receive signal strength indicator (English: receive signal strength indicator, RSSI). A large RSSI of the radio signal of the to-be-identified device indicates that there is a high probability that the to-be-identified device is in a LOS state. A small RSSI of the radio signal of the to-be-identified device indicates that there is a high probability that the to-be-identified device is in a non line of sight (English: non line of sight, NLOS) state. The LOS state means that there is a LOS path between the to-be-identified device and the WLAN device, and the NLOS state means that there is no LOS path between the to-be-identified device and the WLAN device. As shown in FIG. 1, there is an obstruction of a building between an AP1 and a terminal in a view direction, and therefore the AP1 obtains a small RSSI (for example, RSSI = -70 decibels relative to one milliwatt (dBm)). There is no obstruction between an AP2 and the terminal in a view direction, and therefore an RSSI (for example, RSSI = -50 dBm) is large.

However, signal strength is easily affected by shadow fading and small-scale fading in a radio environment. For example, when the to-be-identified device moves tens of centimeters, a change of an RSSI may be up to 10 dBm. The signal strength is also related to a distance between the to-be-identified device and the WLAN device. Even though there is no LOS path between the to-be-identified device and the WLAN device, the RSSI may be large if the to-be-identified device is close to the WLAN device. If there is a LOS path between the to-be-identified device and the WLAN device, and the to-be-identified device is far away from the WLAN device, the RSSI may be small. Therefore, the LOS state that is determined based on the RSSI is inaccurate.

US 2012/269170 relates to synchronization-free station locator in wireless network. US 5,945,948 relates to method and apparatus for location finding in a communication system. US 2016/366554 relates to multi-path mitigation in range finding and tracking objects using reduced attenuation RF technology.

### SUMMARY

This application provides a method for identifying a line of sight path and a wireless device, and the method improves accuracy of identifying a LOS path.

According to a first aspect, a method for identifying a line of sight path is provided according to claim 1. According to a second aspect, a wireless device is provided according to claim 6.

The wireless device obtains, based on the received signal, an energy of the radio signal transmitted through each of the plurality of paths. When a condition is met, the wireless device determines that a candidate path of the plurality of paths is a line of sight path. The condition includes that a ratio of an energy of the radio signal transmitted through the candidate path to a total energy of the radio signals transmitted through the plurality of paths is greater than a threshold.

Both a position change of the to-be-identified device and a distance between the wireless device and the to-be-identified device affect strength of the signal received by the wireless device. If there is a LOS path, a radio signal propagated along the LOS path is always a strongest radio signal among the radio signals transmitted through all the paths. However, in all paths, a path through which a radio signal with highest strength is transmitted is not necessarily a LOS path. This is because that there is definitely a path with highest radio signal strength in all NLOS paths, even though no LOS path exists. If no LOS path exists, none of the NLOS paths has a radio signal much stronger than any other radio signals. Therefore, accuracy of determining the line of sight path by the wireless device is improved by using a ratio of an energy of a radio signal propagated along a single path to a total energy as a basis. In an optional implementation, the wireless device checks whether a ratio of an energy of the radio signal transmitted through each of the plurality of paths to the total energy of the radio signals transmitted through the plurality of paths is greater than the threshold. The wireless device checks whether the energy of each of the radio signals meets the foregoing condition, to simplify logic of identifying the LOS path.

In an optional implementation, the wireless device checks merely whether a ratio of an energy of a radio signal transmitted through an earliest-arrival path of the plurality of paths to the total energy of the radio signals transmitted through the plurality of paths is greater than the threshold. The earliest-arrival path is one or more paths, of the plurality of paths, used to transmit the radio signal that arrives earliest. The LOS path is definitely shorter than any NLOS path, and therefore the radio signal transmitted through the LOS path is definitely arrived at the wireless device earlier than the radio signal transmitted through the NLOS path. Therefore, the wireless device may not check whether an energy of the radio signal that arrives later meets the foregoing condition, to simplify a process of identifying the LOS path. In an optional implementation, there may be one earliest-arrival path. The wireless device may be unable to identify an arrival time sequence of the radio signals transmitted through different paths, and the wireless device may find a plurality of earliest-arrival paths. However, if the wireless device has a sufficient high distinguishing capacity in time domain, the wireless device can determine a unique radio signal that arrives earliest (first). The wireless device may check merely whether an energy of the one radio signal meets the foregoing condition.

In an optional implementation, the condition further includes that the ratio of the energy of the radio signal transmitted through the candidate path to the total energy of the radio signals transmitted through the plurality of paths is continuously greater than the threshold. Continuously tracking whether the energy ratio of the candidate path meets the foregoing condition improves accuracy of determining.

In an optional implementation, the method further includes: measuring, by the wireless device, an angle of arrival of the radio signal transmitted through the line of sight path, to determine a position of the to-be-identified device. In addition to positioning, LOS path identification may also be used in another terminal-related technology such as beamforming.

### BRIEF DESCRIPTION OF DRAWINGS

FIG. 1 is a schematic diagram in which a network device and a terminal are in a non line of sight state;
FIG. 2 is a schematic structural diagram of a communications network according to the present invention;
FIG. 3 is a schematic diagram of communication in a line of sight state according to the present invention;
FIG. 4 is a schematic diagram of communication in a non line of sight state according to the present invention;
FIG. 5 is a schematic flowchart of a method for identifying a line of sight path according to an embodiment of the present invention;
FIG. 6 is a diagram of coordinate distribution of multipath propagation in time and space;
FIG. 7 is a schematic diagram of a communication scenario according to an embodiment of the present invention;
FIG. 8 is a schematic curve diagram of an energy ratio change of a radio signal transmitted through a path according to an embodiment of the present invention;
FIG. 9 is another schematic curve diagram of an energy ratio change of a radio signal transmitted through a path according to an embodiment of the present invention;
FIG. 10 is a possible schematic structural diagram of a wireless device according to an embodiment of the present invention; and
FIG. 11 is another possible schematic structural diagram of a wireless device according to an embodiment of the present invention.

### DESCRIPTION OF EMBODIMENTS

The technical solutions in embodiments of the present invention are further described in detail with reference to accompanying drawings and the embodiments as follows.

A communication method provided in this application is applied to a WLAN network shown in FIG. 2. A communication technology described in this application may be applicable to a Long Term Evolution (English: Long Term Evolution, LTE) system or a wireless communications system using a wireless access technology such as code division multiple access or orthogonal frequency division multiple access. In addition, the communication technology may also be applicable to a subsequent evolved LTE system such as a 5th generation (5G) system or a new radio (English: new radio, NR) system.

In FIG. 2, a wireless device may include a terminal and a network device. The terminal in this application may be a device with a wireless function such as a handheld device, an in-vehicle device, a wearable device (English: wearable device), or a computing device. For example, a network device in this application may be a WLAN access point (English: access point, AP).

In an angle-based positioning system, an AoA may accurately reflect a geometry relationship between a to-be-identified device (for example, a to-be-identified terminal) and a wireless device (for example, an AP). The to-be-identified device is another wireless device that needs to identify a LOS path. The AoA is an angle at which a radio signal of the to-be-identified terminal arrives at the AP. The LOS path has accurate angle information, and therefore the wireless device may determine a position of the to-be-identified device by measuring the AoA of a radio signal that is transmitted through the LOS path.

The following describes an example in which a to-be-identified device is a to-be-identified terminal and a wireless device is an AP.

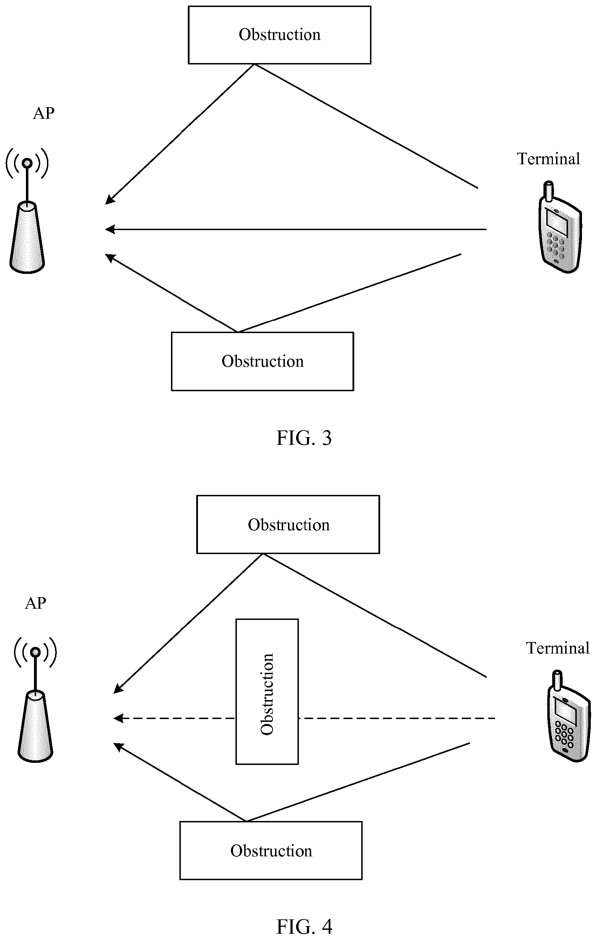

In FIG. 3, there is a stable line of sight between the AP and the to-be-identified terminal. In other words, there is a LOS path between the AP and the to-be-identified terminal. However, in FIG. 4, an obstruction stands between the AP and the to-be-identified terminal, and therefore there is no LOS path between the AP and the to-be-identified terminal. The radio signal is reflected or scattered when hitting against a surrounding obstruction, to arrive at the AP. These reflection or scattering paths are referred to as NLOS paths.

Both a position change of the to-be-identified terminal and a distance change between the AP and the to-be-identified terminal affect an energy of the signal received by the AP. If there is a LOS path, a radio signal propagated along the LOS path is always a strongest radio signal among the radio signals propagated along all the paths. However, in all paths, a path through which a radio signal with highest strength is transmitted is not necessarily a LOS path. This is because that there is definitely a path with highest radio signal strength in all NLOS paths, even though no LOS path exists. If no LOS path exists, none of the NLOS paths has a radio signal much stronger than any other radio signals. Therefore, accuracy of determining the LOS path can be improved by using a ratio of an energy of a radio signal propagated along a single path to a total energy as a basis.

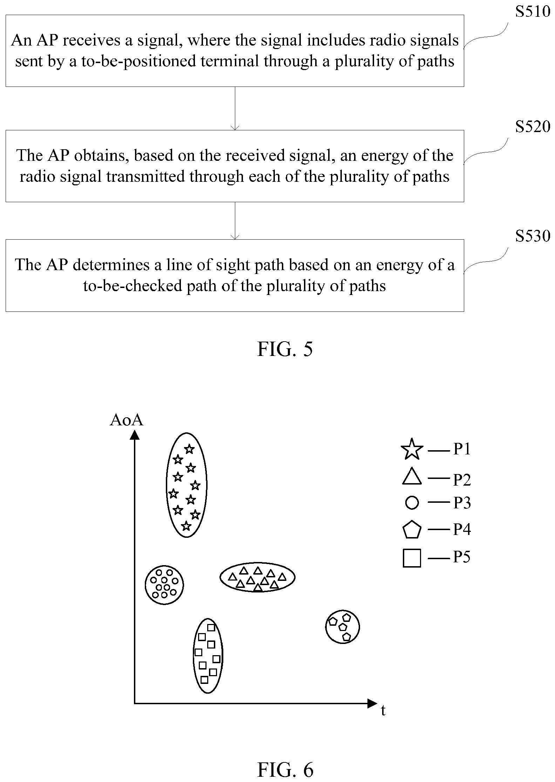

FIG. 5 is a schematic flowchart of a method for identifying a line of sight path according to an embodiment of the present invention. As shown in FIG. 5, the method may include the following steps.

Step 510: An AP receives a signal, where the signal includes radio signals sent by a to-be-identified terminal through a plurality of paths.

The to-be-identified terminal sends the radio signal. The radio signal may be transmitted through a plurality of paths such as a direct path, a reflection path, or a scattering path, to arrive at an antenna of the AP. The radio signal transmitted through each path is a duplicate of the radio signal sent by the to-be-identified terminal. In other words, the signal received by the antenna of the AP includes a radio signal transmitted through a LOS path and/or a radio signal transmitted through an NLOS path. The plurality of paths means two or more paths.

Optionally, the AP may use a clustering method or a training sequence-based identification method to distinguish between the plurality of paths through which the radio signal is transmitted.

Optionally, the AP may use the clustering method to distinguish between the plurality of paths through which the radio signals are transmitted. The AP may collect a plurality pieces of sample data, determine a LOS state of the to-be-identified terminal in the clustering manner, and determine the LOS path of the to-be-identified terminal. As shown in FIG. 6, data of each sample is represented by using one point in the coordinate diagram. Each sample is a radio signal received by the AP through one path. A lateral axis of the coordinate diagram represents a time point t at which each sample is received, and a vertical axis represents an AoA of the sample. The to-be-identified terminal sends the plurality of radio signals. Each radio signal arrives at the AP through the plurality of paths and is received by the AP. Due to moving continuity of the to-be-identified terminal, an angle of each path also changes continuously. Therefore, the AP performs clustering on points in the coordinate diagram. After clustering, the AP obtains the plurality of paths through which the radio signal is transmitted. Each shape of clustered points in the coordinate diagram represents a path, such as P1, P2, P3, P4, and P5. Each path in the coordinate diagram may be either an NLOS path or a LOS path. The NLOS path is a path other than the LOS path, such as a reflection path, a scattering path, or a refraction path. The AP may identify the LOS path of the AP based on a dispersion degree (equivalent to a size of a circle in the coordinate diagram) of clustered points of each path. However, when the to-be-identified terminal moves fast, even though there is a LOS path between the to-be-identified terminal and the AP, a dispersion degree of clustered points of the LOS path is also high. Consequently, the LOS path cannot be identified.

It can be learned that in the clustering method, the plurality of paths through which the radio signals are transmitted are first identified, and then the LOS path is determined based on the dispersion degree of the clustered points. The LOS path cannot be identified accurately by using the clustering method, but the plurality of paths can be distinguished accurately. Therefore, the AP may use the clustering method to distinguish between the plurality of paths through which the radio signals are transmitted.

When using the clustering method to distinguish between the plurality of paths through which the radio signals are transmitted, the AP may configure a plurality of antennas (for example, three or four antennas) to improve clustering accuracy, so that an estimated AoA is relatively accurate, and the LOS path can be identified in a better manner. This reduces a possibility of energy superposition of the radio signals on the paths, which occurs because the AP cannot distinguish between two or more paths and incorrectly identifies the two or more paths as one path.

Optionally, on a WLAN, by using a long training field (English: long training field, LTF) in a WLAN radio signal, the AP may distinguish between the plurality of paths through which the radio signal is transmitted.

The AP may receive the signal. The signal includes the radio signals sent by the to-be-identified terminal through the plurality of paths. The radio signal includes a first training sequence, and the signal is superposition of a plurality of first training sequences transmitted through the plurality of paths. The AP matches the signal and a second training sequence stored in the AP to obtain time points at which the plurality of first training sequences transmitted through the plurality of paths are received. The first training sequence and the second training sequence have a same value. A training sequence has good autocorrelation in time domain. Therefore, radio signals received at close time points can be distinguished between each other by using the training sequence to identify a time point at which the radio signal is received. In other words, a strong distinguishing capability in time domain is provided.

The AP obtains distribution of the plurality of paths in time domain based on distribution of time points of the plurality of first training sequences in time domain, to distinguish between the plurality of paths through which the radio signal is transmitted.

Step 520: The AP obtains, based on the received signal, an energy of the radio signal transmitted through each of the plurality of paths.

The signal received by the AP is a radio signal transmitted along each of the plurality of paths. The AP may obtain, based on the signal, the energy of the radio signal transmitted through each of the plurality of paths.

Step 530: The AP determines a line of sight path based on an energy of a to-be-checked path of the plurality of paths.

Before performing step 530, the AP may select the to-be-checked path from the plurality of paths. The to-be-checked path is at least one path possibly including the LOS path.

Optionally, the AP may select all the paths as the to-be-checked paths. The AP checks whether all the paths meet a determining condition, and determines that a to-be-checked path meeting the condition is the LOS path, to reduce complexity of LOS path identification software or hardware.

Optionally, the LOS path is a shortest transmission path between the AP and the to-be-identified terminal, and therefore a radio signal transmitted through the LOS path arrives at the AP earliest.

Based on this, the AP selects at least one path of the earliest-arrived radio signal as the to-be-checked path. It can be understood that, if there is an LOS path between the AP and the to-be-identified terminal, one or more paths through which the radio signal that arrives earliest is transmitted definitely include the LOS path. In other words, the to-be-checked paths definitely include the LOS path. The AP checks whether each of the to-be-checked paths meets a determining condition, and determines that a to-be-checked path meeting the condition is the LOS path, to simplify a process of identifying the LOS path.

If the AP has a sufficient high distinguishing capability, the AP can determine a unique path through which the radio signal that arrives earliest (first) is transmitted as the to-be-checked path. The AP checks whether the to-be-checked path meets the determining condition, and if the to-be-checked path meets the condition, the AP determines that the to-be-checked path is the LOS path. In other words, the AP checks merely whether an energy of the one radio signal meets the foregoing condition.

It can be learned that the path through which the radio signal that arrives earliest is transmitted is selected as the to-be-checked path, greatly reducing a quantity of to-be-checked paths and shortening a time for determining the LOS path by the AP.

The AP performs determining on each to-be-checked path based on an energy of each of the to-be-checked paths of the plurality of paths. The determining method may be as follows: determining whether a ratio of an energy of a radio signal transmitted through the to-be-checked path to a total energy of the radio signals transmitted through the plurality of paths is greater than a threshold.

When there is a to-be-checked path, and an ratio of an energy of a radio signal transmitted through the to-be-checked path to a total energy of the radio signals transmitted through a plurality of paths is greater than a threshold, the AP determines that the to-be-checked path is the LOS path.

When a ratio of an energy of a radio signal transmitted through any to-be-checked path to the total energy of the radio signals transmitted through the plurality of paths is less than the threshold, the AP determines that no LOS path exists.

It is assumed that there are T paths in total, and the threshold is EG. A condition for a ratio of an energy of a radio signal transmitted through a to-be-checked path to the total energy of the radio signals transmitted through the T paths may be expressed as: Eᵢ/E_{T} > E_{G}. Eᵢ represents an energy of a radio signal transmitted through an i^{th} to-be-checked path, and E_{T} represents the total energy of the radio signals transmitted through the T paths. T is a positive integer greater than or equal to 2, and i is a positive integer less than or equal to T. The AP separately compares Eᵢ/E_{T} of each of to-be-checked paths with *E_{G}*, to identify a to-be-checked path whose energy ratio is greater than the threshold, and determines that the to-be-checked path is the LOS path.

Optionally, the expression of the condition for the ratio of the energy of the radio signal transmitted through the to-be-checked path to the total energy of the radio signals transmitted through the T paths is not unique, for example, 10log₁₀(Eᵢ/E_{T}) > 10log₁₀E_{G}, Eᵢ/(E_{T}-Eᵢ) > EG/(1-EG), or 10log₁₀(Eᵢ/(E_{T}-Eᵢ)) > 10log₁₀(E_{G}/(1-E_{G})).

All values in a computer are discrete. Therefore, that the energy ratio is greater than the threshold may be determined based on that the energy ratio is greater than the threshold or that the energy ratio is greater than or equal to another value. The another value is a discrete value greater than the threshold, and there are no any other discrete values between the discrete value and the threshold.

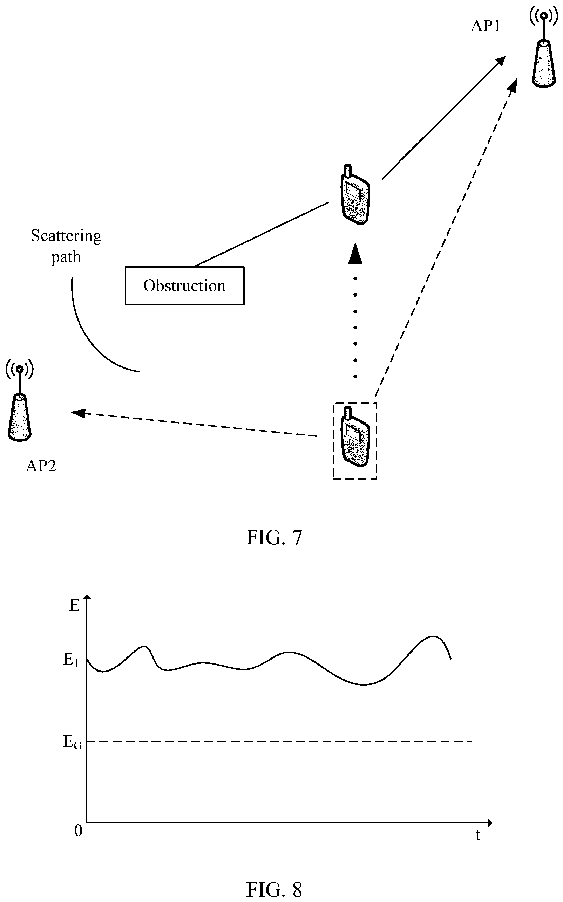

Optionally, as a position of the to-be-identified terminal changes, a to-be-checked path between the to-be-identified terminal and the AP changes accordingly. As shown in FIG. 7, a dotted line represents a moving direction of the to-be-identified terminal.

When the position of the to-be-identified terminal does not change, no obstruction stands on two dashed-line paths between the to-be-identified terminal and an AP1 and between the to-be-identified terminal and an AP2. In this case, the two dashed-line paths are to-be-checked paths of the AP1 and the AP2, and both meet that an energy ratio of an energy of a radio signal transmitted through the to-be-checked path to a total energy of the radio signals transmitted through a plurality of paths is greater than a threshold. As shown in FIG. 8, a lateral axis in the coordinate diagram represents a time point t at which a sample is received, and a vertical axis represents an energy ratio E of the sample, a dashed line represents a threshold EG, and E₁ (a curve) represents the energy ratio of the energy of the radio signal transmitted through the to-be-checked path to the total energy of the radio signals transmitted through the plurality of paths. It can be learned that the two dashed-line paths are a LOS path between the to-be-identified terminal and the AP1 and a LOS path between the to-be-identified terminal and the AP2.

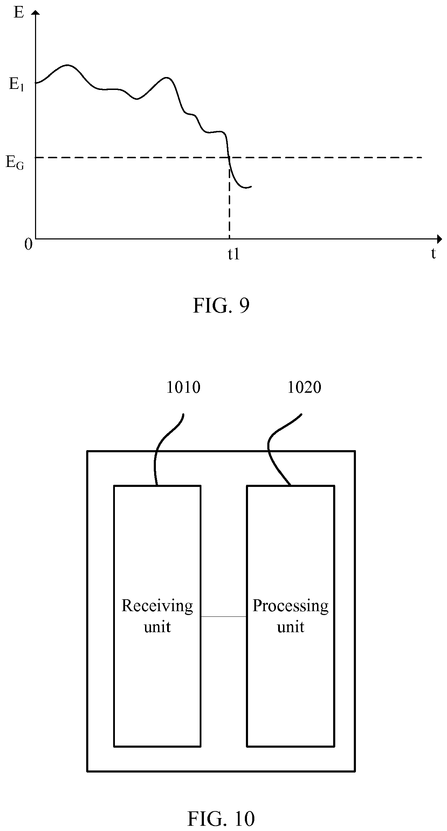

In a position change process of the to-be-identified terminal, no obstruction stands between the to-be-identified terminal and the AP1, and the dashed-line path still meets that the energy ratio of the energy of the radio signal transmitted through the dashed-line path to the total energy of the radio signals transmitted through the plurality of paths is greater than the threshold. Therefore, there is a LOS path between the to-be-identified terminal and the AP1, as shown in FIG. 8. An obstruction stands between the to-be-identified terminal and the AP2, the radio signal needs to pass through a reflection path or a scattering path to arrive at the AP2, and the energy ratio of the energy of the radio signal transmitted through the to-be-checked path between the to-be-identified terminal and the AP2 to the total energy of the radio signals transmitted through the plurality of paths is less than the threshold. As shown in FIG. 9, E₁ is an energy ratio of a to-be-checked path when the to-be-identified terminal is in a still state. When the position of the to-be-identified terminal changes continuously, the energy ratio of the to-be-checked path within a time period from 0 to t1 is continuously greater than the threshold. In other words, the AP2 can track the to-be-checked path. However, after the moment t1, the energy ratio of the to-be-checked path is less than the threshold. In other words, the AP2 cannot track the to-be-checked path. Therefore, the to-be-checked path between the to-be-identified terminal and the AP2 is not a LOS path. Based on this, the AP may also use a determining method that a ratio of an energy of a radio signal transmitted through the to-be-checked path to a total energy of the radio signals transmitted through a plurality of paths is continuously greater than a threshold, to determine whether a to-be-checked path is a LOS path. "Continuous" may mean a continuous time or a quantity of consecutive times.

For example, if the AP determines that a ratio of an energy of a radio signal transmitted through a to-be-checked path to a total energy of the radio signals transmitted through a plurality of paths is continuously greater than a threshold within a preset time period (for example, one second), the AP determines that the to-be-checked path is a LOS path.

For another example, if the AP determines that a ratio of an energy of a radio signal transmitted through a to-be-checked path to a total energy of the radio signals transmitted through a plurality of paths is continuously greater than a threshold within a preset quantity of times (for example, three times), the AP determines that the to-be-checked path is a LOS path.

In the foregoing determining method, an energy ratio of a to-be-checked path is continuously compared with a threshold, thereby improving accuracy of identifying a LOS path.

It can be learned that according to the method for identifying a line of sight path provided in this embodiment of the present invention, the AP receives the radio signals sent by the to-be-identified terminal through the plurality of paths, and obtains, based on the radio signals sent by the to-be-identified terminal through the plurality of paths, an energy of the radio signal transmitted through each of the paths. When the ratio of the energy of the radio signal transmitted through the to-be-checked path to the total energy of the radio signals transmitted through the plurality of paths is greater than the threshold, the AP determines that the to-be-checked path of the plurality of paths is the line of sight path. This method improves accuracy of determining the line of sight path by the AP.

FIG. 10 is a possible schematic structural diagram of a wireless device in the foregoing embodiments.

The wireless device includes at least a receiving unit 1010 and a processing unit 1020.

The receiving unit 1010 is configured to receive a signal. The signal includes radio signals sent by a terminal through a plurality of paths.

The processing unit 1020 is configured to obtain, based on the signal received by the receiving unit 1010, an energy of the radio signal transmitted through each of the plurality of paths.

When a condition is met, the processing unit 1020 is further configured to determine that a candidate path of a to-be-checked path of the plurality of paths is a line of sight path. The condition includes that a ratio of an energy of the radio signal transmitted through the candidate path to a total energy of the radio signals transmitted through the plurality of paths is greater than a threshold.

Optionally, the processing unit 1020 is further configured to check merely whether a ratio of an energy of a radio signal that arrives earliest through a to-be-checked path to the total energy of the radio signals transmitted through the plurality of paths is greater than the threshold. The earliest-arrival path is one or more paths, of the plurality of paths, used to transmit the radio signal that arrives earliest.

Optionally, there is one earliest-arrival path.

Optionally, the condition further includes that the ratio of the energy of the radio signal transmitted through the candidate path of the to-be-checked paths to the total energy of the radio signals transmitted through the plurality of paths is continuously greater than the threshold.

Optionally, the processing unit 1020 is further configured to measure an angle of arrival of the radio signal transmitted through the line of sight path, to determine a position of the to-be-measured terminal.

Functions of functional units of the wireless device can be implemented by performing the steps in the foregoing embodiments. Therefore, a specific working process of the wireless device provided in this embodiment of the present invention is not described herein.

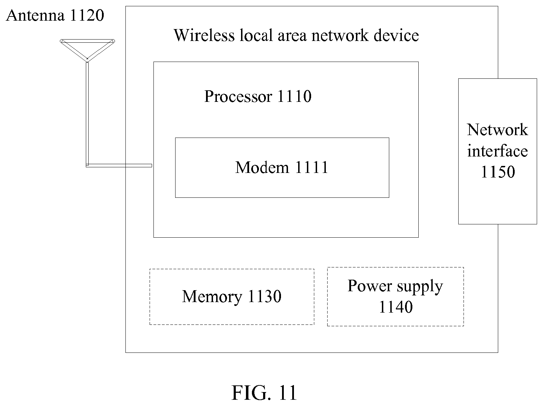

FIG. 11 is another possible schematic structural diagram of a wireless device in the foregoing embodiments.

The wireless device includes at least a processor 1110, an antenna 1120, and a network interface 1150.

Optionally, the wireless device may further include a memory 1130 and/or a power supply 1140.

The processor 1110 may be a central processing unit (CPU) or a combination of a CPU and a hardware chip. The hardware chip may be an application-specific integrated circuit (ASIC), a programmable logic device (PLD), or a combination thereof. The PLD may be a complex programmable logic device (CPLD), a field programmable gate array (FPGA), a generic array logic (GAL), or any combination thereof. The processor 1110 is configured to control the entire network device and signal processing. The processor 1110 may include a modem 1111.

The modem 1111 is configured to module/demodulate a WLAN signal. The modem 1111 is connected to the antenna 1120, to receive and transmit a WLAN signal.

The network interface 1150 is connected to a peripheral device (for example, a server), to perform data transmission with the peripheral device.

The memory 1130 may include a volatile memory, for example, a random-access memory (RAM). The memory 1130 may also include a non-volatile memory, for example, a read-only memory (ROM), a flash memory (English: flash memory), a hard disk drive, or a solid-state drive. The memory 1130 may also include a combination of the foregoing types of memories. The memory 1130 is configured to store various applications, operating systems, and data. The memory 1130 may transmit the stored data to the processor 1110.

It can be understood that the memory 1130 may be integrated into the processor 1110 or may exist independently.

The antenna 1120 is configured to receive a signal. The signal includes radio signals sent by a to-be-identified terminal through a plurality of paths. The antenna 1120 may include an antenna array.

The processor 1110 is configured to obtain, based on the signal received by the antenna 1120, an energy of the radio signal transmitted through each of the plurality of paths.

When a condition is met, the processor 1110 is further configured to determine that a candidate path of the plurality of paths is a line of sight path. The condition includes that a ratio of an energy of the radio signal transmitted through the candidate path to a total energy of the radio signals transmitted through the plurality of paths is greater than a threshold.

For problem-resolving implementations of components of the wireless device and beneficiary effects in the foregoing embodiment, refer to method implementations and beneficiary effects shown in FIG. 5. Therefore, details are not repeated herein.

Steps of methods or algorithms described in the embodiments disclosed in this specification may be implemented by hardware, a software module executed by a processor, or a combination thereof. A software instruction may include a corresponding software module. The software module may be stored in a random access memory, a flash memory, a read-only memory, an erasable programmable read only memory (EPROM), an electrically erasable programmable read only memory (EEPROM), a hard disk, an optical disc, or any other form of storage medium well-known in the art. For example, a storage medium is coupled to a processor, so that the processor can read information from the storage medium or write information into the storage medium. Certainly, the storage medium may be a component of the processor. Certainly, the processor and the storage medium may exist in a user device as discrete components.

A person skilled in the art should be aware that in the foregoing one or more examples, functions described in this application may be implemented by hardware, software, firmware, or any combination thereof. When the functions are implemented by the software and the firmware, these functions may be stored in a computer readable medium.

The objectives, technical solutions, and beneficiary effects of this application are further described in detail in the foregoing specific embodiments. It should be understood that the foregoing descriptions are merely specific embodiments of this application, but are not intended to limit the protection scope of this application. The scope of protection shall be defined by the appended claims.

## Claims

1. A method for identifying a line of sight path, wherein the method comprises:
receiving (S510), by a wireless device, a signal, wherein the signal comprises radio signals sent by a to-be-identified device through a plurality of paths;
obtaining (S520), by the wireless device based on the signal, an energy of the radio signal transmitted through each of the plurality of paths;
selecting (S530), by the wireless device, at least one path of the earliest-arrived radio signal as the to-be-checked path; and
when a condition is met, determining, by the wireless device, that the to-be-checked path of the plurality of paths is a line of sight path, wherein the condition comprises that a ratio of an energy of the radio signal transmitted through the to-be-checked path to a total energy of the radio signals transmitted through the plurality of paths is greater than a threshold.

2. The method according to claim 1, wherein the method further comprises:
checking, by the wireless device, merely whether a ratio of an energy of a radio signal transmitted through an earliest-arrival path of the plurality of paths to the total energy of the radio signals transmitted through the plurality of paths is greater than the threshold, wherein the earliest-arrival path is one or more paths, of the plurality of paths, used to transmit the radio signal that arrives earliest.

3. The method according to claim 2, wherein there is one earliest-arrival path.

4. The method according to any one of claims 1 to 3, wherein the condition further comprises:
the ratio of the energy of the radio signal transmitted through the to-be-checked path to the total energy of the radio signals transmitted through the plurality of paths is continuously greater than the threshold.

5. The method according to any one of claims 1 to 4, wherein the method further comprises:
measuring, by the wireless device, an angle of arrival of the radio signal transmitted through the line of sight path.

6. A wireless device, wherein the device comprises a receiving unit (1010) and a processing unit (1020), wherein
the receiving unit is configured to receive a signal, wherein the signal comprises radio signals sent by a to-be-identified device through a plurality of paths; and
the processing unit is configured to: obtain, based on the signal received by the receiving unit, an energy of the radio signal transmitted through each of the plurality of paths; select at least one path of the earliest-arrived radio signal as the to-be-checked path; and when a condition is met, determine that a to-be-checked path of the plurality of paths is a line of sight path, wherein the condition comprises that a ratio of an energy of the radio signal transmitted through the to-be-checked path to a total energy of the radio signals transmitted through the plurality of paths is greater than a threshold.

7. The device according to claim 6, wherein
the processing unit is further configured to check merely whether a ratio of an energy of a radio signal transmitted through an earliest-arrival path of the plurality of paths to the total energy of the radio signals transmitted through the plurality of paths is greater than the threshold, wherein the earliest-arrival path is one or more paths, of the plurality of paths, used to transmit the radio signal that arrives earliest.

8. The device according to claim 7, wherein there is one earliest-arrival path.

9. The device according to any one of claims 6 to 8, wherein the condition further comprises:
the ratio of the energy of the radio signal transmitted through the to-be-checked path to the total energy of the radio signals transmitted through the plurality of paths is continuously greater than the threshold.

10. The device according to any one of claims 6 to 9, wherein the processing unit is further configured to measure an angle of arrival of the radio signal transmitted through the line of sight path.

## Patentansprüche

1. Verfahren zum Identifizieren eines Blickrichtungspfades, wobei das Verfahren umfasst:
Empfangen (S510) eines Signals durch eine drahtlose Vorrichtung, wobei das Signal Funksignale umfasst, die von einer zu identifizierenden Vorrichtung über mehrere Pfade gesendet werden;
Erhalten (S520), durch die drahtlose Vorrichtung basierend auf dem Signal, einer Energie des Funksignals, das über jeden der mehreren Pfade übertragen wird;
Auswählen (S530), durch die drahtlose Vorrichtung, mindestens eines Pfades des am frühesten eingetroffenen Funksignals als den zu prüfenden Pfad; und
wenn eine Bedingung erfüllt ist, Bestimmen, durch die drahtlose Vorrichtung, dass der zu prüfende Pfad der mehreren Pfade ein Blickrichtungspfad ist, wobei die Bedingung umfasst, dass ein Verhältnis einer Energie des über den zu prüfenden Pfad übertragenen Funksignals zu einer Gesamtenergie der über die mehreren Pfade übertragenen Funksignale größer als ein Schwellenwert ist.

2. Verfahren nach Anspruch 1, wobei das Verfahren ferner umfasst:
Prüfen durch die drahtlose Vorrichtung lediglich, ob ein Verhältnis einer Energie eines Funksignals, das über einen am frühesten eintreffenden Pfad der mehreren Pfade übertragen wird, zu der Gesamtenergie der über die mehreren Pfade übertragenen Funksignale größer als der Schwellenwert ist, wobei der am frühesten eintreffende Pfad einer oder mehrere Pfade der mehreren Pfade ist, die verwendet werden, um das Funksignal zu übertragen, das am frühesten eintrifft.

3. Verfahren nach Anspruch 2, wobei es einen am frühesten eintreffenden Pfad gibt.

4. Verfahren nach einem der Ansprüche 1 bis 3, wobei die Bedingung ferner umfasst:
das Verhältnis der Energie des über den zu prüfenden Pfad übertragenen Funksignals zur Gesamtenergie der über die mehreren Pfade übertragenen Funksignale ist kontinuierlich größer als der Schwellenwert.

5. Verfahren nach einem der Ansprüche 1 bis 4, wobei das Verfahren ferner umfasst:
Messen eines Eintreffwinkels des über den Blickrichtungspfad übertragenen Funksignals durch die drahtlose Vorrichtung.

6. Drahtlose Vorrichtung, wobei die Vorrichtung eine Empfangseinheit (1010) und eine Verarbeitungseinheit (1020) umfasst, wobei
die Empfangseinheit dazu konfiguriert ist, ein Signal zu empfangen, wobei das Signal Funksignale umfasst, die von einer zu identifizierenden Vorrichtung über mehrere Pfade gesendet werden; und
die Verarbeitungseinheit dazu konfiguriert ist: basierend auf dem von der Empfangseinheit empfangenen Signal eine Energie des über jeden der mehreren Pfade übertragenen Funksignals zu erhalten; mindestens einen Pfad des am frühesten eingetroffenen Funksignals als den zu prüfenden Pfad auszuwählen; und wenn eine Bedingung erfüllt ist, zu bestimmen, dass ein zu prüfender Pfad der mehreren Pfade ein Blickrichtungspfad ist, wobei die Bedingung umfasst, dass ein Verhältnis einer Energie des über den zu prüfenden Pfad übertragenen Funksignals zu einer Gesamtenergie der über die mehreren Pfade übertragenen Funksignale größer als ein Schwellenwert ist.

7. Vorrichtung nach Anspruch 6, wobei
die Verarbeitungseinheit ferner dazu konfiguriert ist, lediglich zu prüfen, ob ein Verhältnis einer Energie eines über einen am frühesten eintreffenden Pfad der mehreren Pfade übertragenen Funksignals zu der Gesamtenergie der über die mehreren Pfade übertragenen Funksignale größer als der Schwellenwert ist,
wobei der am frühesten eintreffende Pfad ein oder mehrere Pfade aus den mehreren Pfaden ist, die verwendet werden, um das Funksignal zu übertragen, das am frühesten eintrifft.

8. Vorrichtung nach Anspruch 7, wobei es einen am frühesten eintreffenden Pfad gibt.

9. Vorrichtung nach einem der Ansprüche 6 bis 8, wobei die Bedingung ferner umfasst:
das Verhältnis der Energie des über den zu prüfenden Pfad übertragenen Funksignals zur Gesamtenergie der über die mehreren Pfade übertragenen Funksignale ist kontinuierlich größer als der Schwellenwert.

10. Vorrichtung nach einem der Ansprüche 6 bis 9, wobei die Verarbeitungseinheit ferner dazu konfiguriert ist, einen Eintreffwinkel des über den Blickrichtungspfad übertragenen Funksignals zu messen.

## Revendications

1. Procédé pour identifier un trajet en visibilité directe, dans lequel le procédé comprend les étapes suivantes :
recevoir (S510) un signal, par un dispositif sans fil, dans lequel le signal comprend des signaux radio envoyés par un dispositif à identifier à travers une pluralité de trajets ;
obtenir (S520), par le dispositif sans fil, sur la base du signal, une énergie du signal radio transmis par chacun de la pluralité de trajets ;
sélectionner (S530), par le dispositif sans fil, au moins un trajet du signal radio arrivé le plus tôt comme étant le trajet à vérifier ; et
lorsqu'une condition est satisfaite, déterminer, par le dispositif sans fil, que le trajet à vérifier de la pluralité de trajets est un trajet en visibilité directe, dans lequel la condition comprend qu'un rapport d'une énergie du signal radio transmis par le trajet à vérifier sur une énergie totale des signaux radio transmis par la pluralité de trajets est supérieur à un seuil.

2. Procédé selon la revendication 1, dans lequel le procédé comprend en outre l'étape suivante :
vérifier, par le dispositif sans fil, simplement si un rapport d'une énergie d'un signal radio transmis par le trajet à l'arrivée la plus précoce parmi la pluralité de trajets sur l'énergie totale des signaux radio transmis par la pluralité de trajets est supérieur au seuil, dans lequel le trajet à l'arrivée la plus précoce est un ou plusieurs trajets, parmi la pluralité de trajets, utilisés pour transmettre le signal radio qui arrive le plus tôt.

3. Procédé selon la revendication 2, dans lequel il y a un trajet à l'arrivée la plus précoce.

4. Procédé selon l'une quelconque des revendications 1 à 3, dans lequel la condition comprend en outre que :
le rapport entre l'énergie du signal radio transmis par le trajet à vérifier et l'énergie totale des signaux radio transmis par la pluralité de trajets soit continuellement supérieur au seuil.

5. Procédé selon l'une quelconque des revendications 1 à 4, dans lequel le procédé comprend en outre les étapes suivantes :
mesurer, par le dispositif sans fil, un angle d'arrivée du signal radio transmis par le trajet en visibilité directe.

6. Dispositif sans fil, dans lequel le dispositif comprend une unité de réception (1010) et une unité de traitement (1020), dans lequel
l'unité de réception est configurée pour recevoir un signal, dans lequel le signal comprend des signaux radio envoyés par un dispositif à identifier à travers une pluralité de trajets ; et
l'unité de traitement est configurée pour : obtenir, sur la base du signal reçu par l'unité de réception, une énergie du signal radio transmis par chacun de la pluralité de trajets ; sélectionner au moins un trajet du signal radio arrivé le plus tôt en tant que trajet à vérifier ; et, lorsqu'une condition est satisfaite, déterminer qu'un trajet à vérifier de la pluralité de trajets est un trajet en visibilité directe, dans lequel la condition comprend qu'un rapport d'une énergie du signal radio transmis par le trajet à vérifier sur une énergie totale des signaux radio transmis par la pluralité de trajets est supérieur à un seuil.

7. Dispositif selon la revendication 6, dans lequel :
l'unité de traitement est en outre configurée pour simplement vérifier si un rapport d'une énergie d'un signal radio transmis par un trajet à l'arrivée la plus précoce parmi la pluralité de trajets sur l'énergie totale des signaux radio transmis par la pluralité de trajets est supérieur au seuil, dans lequel le trajet à l'arrivée la plus précoce est un ou plusieurs trajets, parmi la pluralité de trajets, utilisés pour transmettre le signal radio qui arrive le plus tôt.

8. Dispositif selon la revendication 7, dans lequel il y a un trajet à l'arrivée la plus précoce.

9. Dispositif selon l'une quelconque des revendications 6 à 8, dans lequel la condition comprend en outre que :
le rapport entre l'énergie du signal radio transmis par le trajet à vérifier et l'énergie totale des signaux radio transmis par la pluralité de trajets soit continuellement supérieur au seuil.

10. Dispositif selon l'une quelconque des revendications 6 à 9, dans lequel l'unité de traitement est en outre configurée pour mesurer un angle d'arrivée du signal radio transmis par le trajet en visibilité directe.
